# EUROPEAN PATENT SPECIFICATION

(11) **EP 1 114 255 B1**
(45) Date of publication and mention of the grant of the patent: **25.06.2003**
(21) Application number: 99947288.9
(22) Date of filing: 08.09.1999
(51) Int. Cl.: F16B 12/26, F16B 7/04

(54) **CONNECTING JOINTS FOR COLLAPSIBLE STRUCTURES**
VERBINDUNGSELEMENTE FÜR ZUSAMMENLEGBARE STRUKTUREN
RACCORDS POUR STRUCTURES PLIABLES

(30) Priority: 18.09.1998 IT VI980172
(43) Date of publication of application: 11.07.2001
(73) Proprietor: NARDI S.p.A., I-36072 Chiampo (VI) (IT); Nardi, Giampietro, 36072 Chiampo (IT)
(72) Inventor: NARDI, Giampietro, I-36072 Chiampo (IT)
(74) Representative: Bonini, Ercole
(86) International application number: EP9906606
(87) International publication number: WO00017528

(56) References cited:
- EP-A- 0 563 494
- WO-A-92/14066
- GB-A- 2 274 773
- US-A- 2 212 679
- US-A- 4 247 216
- US-A- 5 459 901

## Description

The invention concerns a connecting joint for collapsible structures, particularly suited for use in producing collapsible tables.

The garden furniture sector and similar often demands tables or other structures that can be easily collapsed and reassembled whenever necessary. This has the purpose of facilitating transport and reducing their dimensions when they are put away or stored.

For this reason the ends of the structural elements are shaped so that they provide connecting joints that allow the structure to be constructed, whether the structure be for instance a table, chair or anything else, that are easy to assemble and collapse.

Known types of joints generally have male-female fasteners suited to fit into one another to guarantee the mechanical stability of the structure, which are made in the most varied types of forms.

Known products have the main disadvantage of providing joints having fasteners that are difficult to locate and are not always easy and quick to set in their fastened position.

What's more it can be added that such known joints, primarily in the uncoupling phase, require substantial effort to flex the constituent parts to separate the structural elements.

An additional disadvantage is that known productions of joints do not provide components suited to emphasise and guarantee that the parts being joined together have been fastened properly. As a consequence the user is not always aware that the connection has been made properly, above all when the components being joined together are not easy to reach or out of the user's line of vision.

The US-A-4247216 discloses a connection joint having a separate spring member with thumb buttons which snap into holes belonging to the male and the female elements. No device is provided to correctly position male and female members in order to quickly lock said members.

This invention intends to overcome these inconveniences.

In particular one scope of this invention is to produce a connection joint that has fasteners easily located where they have a quick, clear-cut coupling method.

Another scope is that the joint can easily be uncoupled when the user intends to collapse the parts making up the structure.

Another scope is that the joint has elements capable of enabling the user to perceive that it has been fastened properly.

An additional scope of the invention is to produce a joint that is practically impossible to uncouple by accident, for instance because the structure is handled incorrectly and clumsily after it has been assembled.

Last but not least, a scope is that the joint invention can be integrated in the structural elements, whatever their form, so that they do not relinquish the pleasing appearance of the overall structure.

Said scopes and any others are achieved by a connection joint for collapsible structures that, in accordance with the main claim, includes a male component and a female component movably connected into one another, in which said components have first positioning devices suited to aid the coupling of the male component into the female component and second locking devices that can be snap coupled together suited to lock said components together when the male component is fully fitted into the female component, and having been fastened together, both of said locking devices are suited to prevent the components from sliding apart.

Additional characteristics and details of the invention shall be better illustrated during the description of a preferred form of execution that is given as a guideline but not a limitation and is illustrated with reference to the attached diagrams where:
- fig. 1 illustrates an isometric blow-up of the components that make up the joint invention;
- fig. 2 illustrates one of the components in fig. 1;
- figures 3 to 5 illustrate the phase where the components are fastened together to form the joint in fig. 1;
- fig. 6 illustrates the phase where the components forming the joint in fig.1 are unfastened;
- fig. 7 illustrates an isometric view of a collapsible table using the joint in fig. 1;
- fig. 8 illustrates a detail of fig. 1.

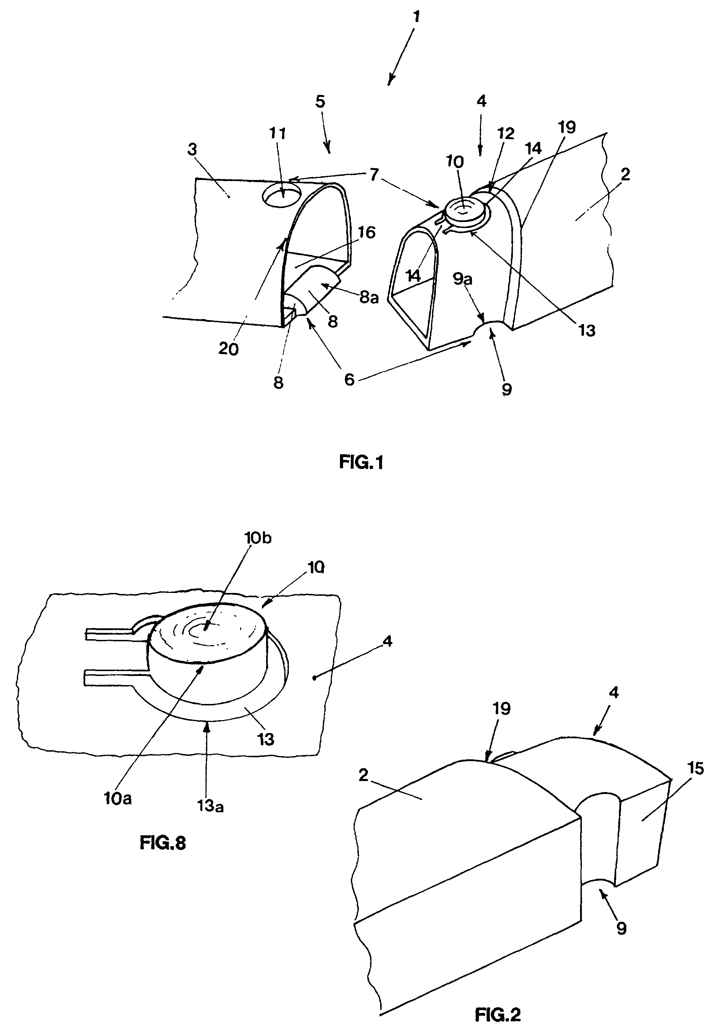

The connection joint referred to in this invention is illustrated in fig. 1 where it is generally indicated by 1 and is used to join together the ends of two structural elements 2 and 3 preferably but not necessarily having a tubular form belonging to a collapsible structure.

The joint 1 includes a male component 4 belonging to the end of the structural element 2 and a female component 5 belonging to the end of the structural element 3, movably connected one inside the other to form a continuous structure.

In a variant of its execution, not described or shown in the diagrams for the sake of brevity, the male-female components, instead of being made in a solid block with the structural elements, may be applied to these by means of a special connecting system.

Said male 4 and female 5 components have first positioning devices generally indicated by 6 suited to aid the coupling and second locking devices generally indicated by 7 that can be snap coupled together suited to lock the structural elements together and to guarantee mechanical continuity when the male component 4 is fully fitted into the female component 5.

When fastened, both the positioning devices 6 and 7 cooperate to prevent the structural elements 2 and 3 from sliding apart.

With regards to the first positioning devices 6, they consist of a ridge 8 belonging to the female component 5 and having a convex curvilinear form 8a, that fits into a seat 9 having a concave curvilinear form 9a as seen in fig. 2 belonging to the male component 4.

In the form of execution described and illustrated in the attached figures, the convex forms 8a and concave forms 9a have a cross-section basically shaped like the arc of a circle.

With regards to the second locking devices 7, they consist of a flexing button 10 on the male component 4, suited to fit into a hole 11 made in the female component 5.

The button 10 has a basically cylindrical form and cooperates with a means of flexing 12 suited to make it sit in a hole 13 of larger diameter made in the male component 4, that is preferably but not necessarily made of at least one rib 14 that connects the button 10 to the body of the male component 4.

In particular the rib 14 sits inside the perimeter 13a of the hole 13 to guarantee the necessary flexing of the button 10 when it is pressed. It is set at the front of the button in the area where the latter is thinnest. In fact as seen, the top 10a of the button 10 is angled and tapers towards the end of the male component 4 to favour its entry in its respective hole 11 when the male component 4 is fitted into the female component 5. What's more the top 10a also has a bevel 10b suited to aid the pressing of the button 10.

The male component 4 also has a flat surface 15, as seen in fig. 2, that continues from the concave seat 9 and that meets with a counterpart second flat surface 16 found inside the female component 3.

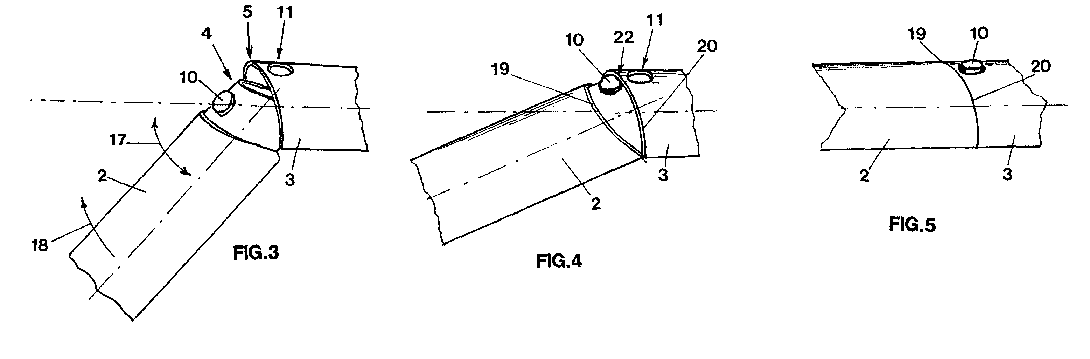

The connection between the structural elements 2 and 3, as shown in figures 3 to 5, works by bringing the female component 5 up against the male component 4 that is held at an angle 17 so that its concave contour of the seat 9 fits into its respective convex ridge 8 belonging to the female component 5 .

Then by making a clockwise turn 18 with the structural element 2 that is aided by sliding the concave curvilinear form 9a of the seat 9 on the convex, curvilinear form 8a of the ridge 8, the button 10, as shown by the detail in fig. 4, flexes back into the hole 13 being pushed against the wall 22 to then fit into the hole 11, being flexed back by the rib 14 when the coupling is made.

When the button 10 enters the hole 11, the snapping noise heard by the user indicates that the fastening has been completed and ensures that the structural elements have been firmly joined together.

When fastened together, the button 10 is blocked against the perimeter of the hole 11 that contains it and the ridge 8 blocked against its respective seat 9. So both locking devices contribute to preventing the components from sliding apart thereby guaranteeing the mechanical continuity of the structure. Simultaneously the alignment between surfaces 15 and 16 also prevents the male 4 and female 5 components from twisting around each other.

An abutment 19 along the outer rim of the male component 4 at the point where the structural element 2, when coupled together, butts up against the outside facing edge 20 of the female component 5 and contributes to guaranteeing stability of the joint against the components bending against each other.

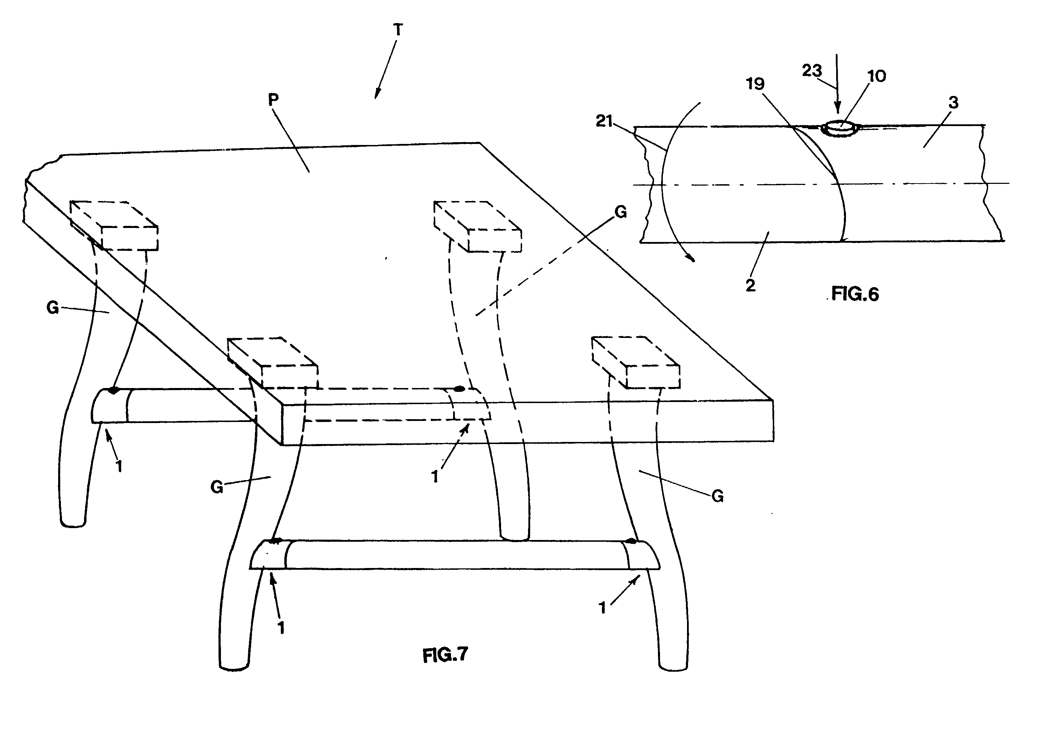

With regards to unfastening, illustrated in fig. 6, the mechanism is very quick and simple, achieved by a pressure 23 on the button 10 so that it is made to flex into the hole 13 and at the same time making an anticlockwise turn 21 on the structural element 2, combined with sliding the two pieces apart tending to separate one from the other.

In a different form of execution the convex ridge 8 may belong to the male component instead of the female component and its respective seat 9 may belong to the female component instead of the male component.

The joint 1 described is especially suited for application on a collapsible structure such as for instance collapsible chairs or tables particularly of the type used for the garden as illustrated in fig. 4.

In this kind of application the joint 1 is used to join the structural elements making up the legs G of table T that support the tabletop P.

Even though the finding has been described with reference to the attached figures, any changes that may be made to its construction shall fall under the claims and therefore be protected by the patent.

## Claims

1. Connection joint (1) for collapsible structure wherein the end of a first element (4) of said structure couples with the end part of a second element (5) through a male-female coupling said male-female coupling presenting first positioning devices (6) suited to correctly position said first and said second element and second elastic locking devices (7) suited to snap said first and said second element together, said first and said second locking devices belonging to said first or to said second structure element, **characterised in that** said first positioning devices (6) consist of a ridge (8) having a convex form on the female component (5) or on the male component (4) that can be fitted into a seat (9) having a concave form belonging to the male component (4) or the female component (5).

2. Joint (1) according to claim 1) **characterised in that** said curvilinear ridge belongs to said female component (5) and said seat (9) having a concave form belongs to said male component (4), said forms (8, 9) being curvilinear.

3. Joint (1) according to claim 1) **characterised in that** said second locking devices (7) consist of a flexing button (10) on the male component (4) suited to fit into a hole (11) made in the female component (5).

4. Joint (1) according to claim 3) **characterised in that** said flexing button (10) has a basically cylindrical form and cooperates with a means of flexing (12) suited to make it sit in a hole (13) of a larger diameter made in the male component (4).

5. Joint (1) according to claim 4) **characterised in that** said means of flexing (12) is made of at least one rib (14) that connects said button (10) to the perimeter of said hole (13).

6. Joint (1) according to any one of claims 1) to 2) **characterised in that** said male component (4) has at least one first flat surface (15) that meets with a counterpart second flat surface (16) found inside the said female component (5).

7. Joint (1) according to claim 6) **characterised in that** said button (10) and said first flat surface (15) are respectively blocked against said hole (11) and against said second flat surface (16) to prevent the male (4) and female (5) components from twisting around each other.

8. Joint (1) according to claim 1) **characterised in that** said male component (4) has at least one abutment (19) butting up against an outside facing edge (20) of said female component (5).

## Patentansprüche

1. Verbindungsgelenk (1) für eine ausbaufähige Struktur, wobei sich das Ende eines ersten Elements (4) der Struktur über eine Steckverbindung mit dem Endteil eines zweiten Elements (5) verbindet und diese Steckverbindung erste Positioniervorrichtungen (6) aufweist, welche das erste und das zweite Element korrekt positionieren, sowie zweite, elastische Arretiervorrichtungen (7), die das erste und das zweite Element ineinander einrasten lassen, wobei die ersten und die zweiten Arretiervorrichtungen zu dem ersten oder zu dem zweiten Strukturelement gehören, **dadurch gekennzeichnet, dass** die ersten Positioniervorrichtungen (6) aus einer konvex geformten Rippe (8) auf dem aufnehmenden Element (5) oder auf dem Steckelement (4) bestehen, welche in eine konkav geformte Aufnahme (9) am Steckelement (4) oder am aufnehmenden Element (5) eingefügt werden kann.

2. Gelenk (1) nach Patentanspruch 1), **dadurch gekennzeichnet, dass** die krummlinige Rippe (8) zum aufnehmenden Element (5) gehört und die konkave Aufnahme (4) zum Steckelement gehört, wobei beide Formen (8,9) krummlinig sind.

3. Gelenk (1) nach Patentanspruch 1), **dadurch gekennzeichnet, dass** die zweiten Arretiervorrichtungen (7) aus einem flexiblen Knopf (10) auf dem Steckelement (4) bestehen, der dazu geeignet ist, in ein Loch (11) im aufnehmenden Element (5) zu passen.

4. Gelenk (1) nach Patentanspruch 3), **dadurch gekennzeichnet, dass** der flexible Knopf (10) eine im Wesentlichen zylindrische Form hat und mit einem Biegemittel (12) zusammenwirkt, das geeignet ist, ihn in ein Loch (13) von größerem Durchmesser im Steckelement (4) einzufügen.

5. Gelenk (1) nach Patentanspruch 4), **dadurch gekennzeichnet, dass** das Biegemittel (12) aus wenigstens einer Rippe (14) besteht, die den Knopf (10) mit dem Umfang des Lochs (13) verbindet.

6. Gelenk (1) nach jeglichem der Patentansprüche 1) bis 2), **dadurch gekennzeichnet, dass** das Steckelement (4) wenigstens eine erste, ebene Fläche (15) aufweist, die auf eine zweite, ebene Gegenfläche (16) innerhalb des aufnehmenden Elements (5) trifft.

7. Gelenk (1) nach jeglichem der Patentansprüche 1) bis 2), **dadurch gekennzeichnet, dass** der Knopf (10) und die erste ebene Fläche (15) jeweils gegen das Loch (11) und die zweite ebene Fläche (16) blockiert sind, um zu verhindern, dass das Steckelement (4) und das aufnehmende Element (5) sich umeinander drehen.

8. Gelenk (1) nach Patentanspruch 6), **dadurch gekennzeichnet, dass** das Steckelement wenigstens ein Widerlager (19) aufweist, das nach oben gegen eine nach außen gerichtete Kante (20) des aufnehmenden Elements (5) stößt.

## Revendications

1. Joint de connexion (1) pour structure par éléments où l'extrémité d'un premier élément (4) de ladite structure couple avec la partie finale d'un deuxième élément (5) au moyen d'un accouplement mâle-femelle, ledit accouplement mâle-femelle présentant de premiers dispositifs de positionnement (6) indiqués pour positionner d'une manière correcte ledit premier et le dit deuxième élément et de deuxièmes dispositifs élastiques de blocage (7) indiqués pour fixer ensemble lesdits premier et deuxième élément, lesdits premier et deuxième dispositifs de blocage appartenant audit premier ou audit deuxième élément de la structure, **caractérisé en ce que** lesdits premiers dispositifs de positionnement (6) se composent d'une arête (8) ayant une forme convexe sur le composant femelle (5) ou sur le composant mâle (4) qui peut être fixée dans un logement (9) ayant une fome concave appartenant au composant mâle (4) ou au composant femelle (5).

2. Joint (1) selon la revendication 1) **caractérisé en ce que** ladite arête curviligne (8) appartient audit composant femelle (5) et ledit logement (9) ayant une forme concave appartient audit composant mâle (4), lesdites formes (8, 9) étant curvilignes.

3. Joint (1) selon la revendication 1) **caractérisé en ce que** lesdits deuxièmes dispositifs de blocage (7) se composent d'un bouton flexible (10) sur le composant mâle (4) indiqué pour s'adapter dans un trou (11) réalisé sur le composant femelle (5).

4. Joint (1) selon la revendication 3) **caractérisé en ce que ledit** bouton flexible (10) a une forme fondamentalement cylindrique et intéragit avec un moyen de flexion (12) indiqué pour le faire loger dans un trou (13) ayant un diamètre plus grand réalisé sur le composant mâle (4).

5. Joint (1) selon la revendication 4) **caractérisé en ce que** ledit moyen de flexion (12) se compose d'au moins une nervure (14) qui relie ledit bouton (10) au périmètre dudit trou (13).

6. Joint (1) selon une quelconque des revendications de 1) à 2) **caractérisé en ce que** le composant mâle (4) a au moins une première surface plate (15) qui s'unit à une deuxième contre-surface plate (16) se trouvant à l'intérieur dudit composant femelle (5).

7. Joint (1) selon la revendication 6) **caractérisé en ce que** ledit bouton (10) et ladite première surface plate (15) sont bloqués respectivement contre ledit trou (11) et contre ladite deuxième surface plate (16) afin d'empêcher que les composants mâle (4) et femelle (5) tournent l'un autour de l'autre.

8. Joint (1) selon la revendication 1) **caractérisé en ce que** ledit composant mâle (4) a au moins un élément de support (19) allant contre un rebord orienté vers l'extérieur (20) dudit composant femelle (5).
